(19) Europäisches Patentamt
European Patent Office
Office européen des brevets

(11) **EP 4 310 444 B1**

(12) **EUROPEAN PATENT SPECIFICATION**

(45) Date of publication and mention
of the grant of the patent:
**24.12.2025 Bulletin 2025/52**

(21) Application number: **23184723.7**

(22) Date of filing: **11.07.2023**

(51) International Patent Classification (IPC):
***G01B 11/02*** (2006.01)     ***G01B 11/06*** (2006.01)

(52) Cooperative Patent Classification (CPC):
**G01B 11/02; G01B 11/0625;** G01B 2210/56

(54) **METHOD AND SYSTEM FOR MEASURING STRUCTURE BASED ON SPECTRUM**

VERFAHREN UND SYSTEM ZUR MESSUNG EINER STRUKTUR AUF SPEKTRUMSBASIS

PROCÉDÉ ET SYSTÈME DE MESURE DE STRUCTURE SUR LA BASE D'UN SPECTRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.07.2022 KR 20220089031**

(43) Date of publication of application:
**24.01.2024 Bulletin 2024/04**

(73) Proprietor: **Samsung Electronics Co., Ltd.**
**Suwon-si, Gyeonggi-do 16677 (KR)**

(72) Inventors:
- **KIM, QHwan**
**Suwon-si, 16677 (KR)**
- **KIM, Jaeyoon**
**Suwon-si, 16677 (KR)**
- **NOH, Hyeonkyun**
**Suwon-si, 16677 (KR)**
- **MA, Ami**
**Suwon-si, 16677 (KR)**
- **LEE, Sunghee**
**Suwon-si, 16677 (KR)**
- **CHANG, Kyubaik**
**Suwon-si, 16677 (KR)**
- **CHEON, Wooyoung**
**Suwon-si, 16677 (KR)**
- **JEONG, Jaehoon**
**Suwon-si, 16677 (KR)**

(74) Representative: **Marks & Clerk LLP**
**15 Fetter Lane**
**London EC4A 1BW (GB)**

(56) References cited:
**WO-A1-2021/140502**     **WO-A1-2021/237949**
**US-A1- 2023 213 870**

- **SIYU ISAAC PARKER TIAN ET AL: "Transfer Learning for Rapid Extraction of Thickness from Optical Spectra of Semiconductor Thin Films",** ARXIV.ORG, CORNELL UNIVERSITY LIBRARY, 201 OLIN LIBRARY CORNELL UNIVERSITY ITHACA, NY 14853, 14 June 2022 (2022-06-14), XP091263956

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The inventive concepts relate to structure measurement, and more particularly, to a method and system for measuring a structure, based on a spectrum.

Due to advances in semiconductor processes, an integrated circuit may have a high degree of integration and may include a complex structure. For verification of an integrated circuit manufactured by a semiconductor process, measuring a structure included in the integrated circuit may require a lot of time and high costs, and may require destruction of the integrated circuit. Accordingly, a method of effectively measuring a structure included in an integrated circuit without destroying the integrated circuit may be beneficial.

Siyu Isaac Parker Tian et al: "Transfer Learning for Rapid Extraction of Thickness from Optical Spectra of Semiconductor Thin Films", Arxiv.org, Cornell University Library, 201 Olin Library Cornell University Ithaca, 14 June 2022, discloses a machine-learning (ML) framework which rapidly extracts film thickness from spectroscopic reflection and transmission.

WO 2021/237949 A1 and US 2023/213870 A1 disclose a metrology method and system for critical dimensions based on a dispersion relation in momentum space.

WO 2021/140502 A1 discloses a system and methods for generating machine learning models for optical critical dimension (OCD) that exploit both measured scatterometric data and known optical models.

SUMMARY

According to an aspect of the invention, a method for measuring a structure is provided according to claim 1. According to a further aspect of the invention there is provided a system according to claim 9. The inventive concepts provide a method and system for effectively measuring a structure, based on a spectrum.

According to an aspect of the inventive concepts, there is provided a method for measuring a structure based on a spectrum of the structure, the method including obtaining a first model trained based on simulation data, the first model including a first sub-model and a second sub-model following the first sub-model, generating a second model such that the second model includes a third sub-model generated from at least a portion of the first sub-model, training the second model based on sample spectrum data generated by measuring spectra of sample structures, and estimating, based on the trained second model, the structure from measured spectrum data generated by measuring the spectrum of the structure.

According to another aspect of the inventive concepts, there is provided a system including at least one processor and a non-transitory storage medium storing instructions which, when executed by the at least one processor, instruct the at least one processor to perform measurement of a structure based on a spectrum of the structure. The measurement of the structure includes obtaining a first model trained based on simulation data, the first model including a first sub-model and a second sub-model following the first sub-model, generating a second model such that the second model includes a third sub-model generated from at least a portion of the first sub-model, and estimating, based on the trained second model, the structure from measured spectrum data generated by measuring the spectrum of the structure.

According to another aspect of the inventive concepts, there is provided a non-transitory storage medium storing instructions which, when executed by at least one processor, instruct the at least one processor to perform measurement of a structure based on a spectrum of the structure, wherein the measurement of the structure includes obtaining a first model trained based on simulation data, the first model including a first sub-model and a second sub-model following the first sub-model, generating a second model such that the second model includes a third sub-model generated from at least of portion of the first sub-model, training the second model based on sample spectrum data generated by measuring spectra of sample structures, and estimating, based on the trained second model, the structure from measured spectrum data generated by measuring the spectrum of the structure.

According to another aspect of the inventive concepts, there is provided a method for measuring a structure based on a spectrum, the method including obtaining a first model trained based on simulation data, the first model including a first sub-model and a second sub-model following the first sub-model, generating a second model based on the first model, training the second model based on sample spectrum data generated by measuring spectra of sample structures, verifying the trained second model based on output data of the first model and output data of the trained second model, and estimating, based on the verified second model, the structure from measured spectrum data generated by measuring the spectrum of the structure.

At least some of the above and other features of the invention are set out in the claims, which define the scope of the present invention.

# EP 4 310 444 B1

BRIEF DESCRIPTION OF THE DRAWINGS

Embodiments will be more clearly understood from the following detailed description taken in conjunction with the accompanying drawings in which:

FIG. 1 is a block diagram of structure measurement according to at least one embodiment;
FIG. 2 is a flowchart of a method of measuring a structure, according to at least one embodiment;
FIG. 3 is a block diagram of a first model and a second model according to at least one embodiment;
FIG. 4 is a view illustrating a machine learning model according to at least one embodiment;
FIG. 5 is a flowchart of a method for measuring a structure, according to at least one embodiment;
FIG. 6 is a flowchart of a method for measuring a structure, according to at least one embodiment;
FIG. 7 is a view illustrating examples of a sub-model according to at least one embodiment;
FIG. 8 is a flowchart of a method for measuring a structure, according to at least one embodiment;
FIG. 9 is a flowchart of a method for measuring a structure, according to at least one embodiment;
FIG. 10 is a table showing examples of output data of a model according to at least one embodiment;
FIG. 11 is a flowchart of a method for measuring a structure, according to at least one embodiment;
FIG. 12 is a flowchart of a method for measuring a structure, according to at least one embodiment;
FIG. 13 is a block diagram of a computer system according to at least one embodiment; and
FIG. 14 is a block diagram of a system according to at least one embodiment.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein, since the scope of protection of the present invention is only limited by the appended claims. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. When the terms "about" or "substantially" are used in this specification in connection with a numerical value, it is intended that the associated numerical value includes a manufacturing tolerance (e.g., ±10%) around the stated numerical value. Further, regardless of whether numerical values are modified as "about" or "substantially," it will be understood that these values should be construed as including a manufacturing or operational tolerance (e.g., ±10%) around the stated numerical values.

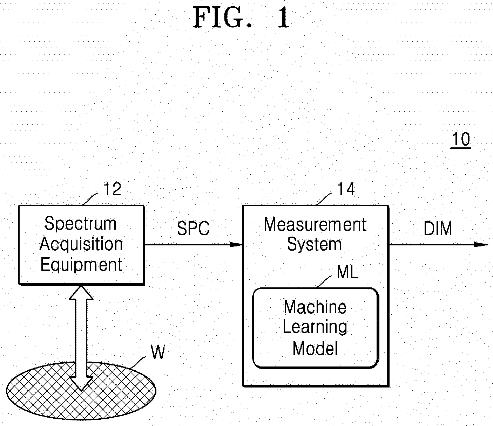

FIG. 1 is a block diagram illustrating a structure measurement 10 according to at least one embodiment. In the structure measurement 10, an object may be measured based on a spectrum measured from (or by) a light beam projected or incident to the object. In the structure measurement 10 of FIG. 1, the structure of at least one of a plurality of dies included in a wafer W may be measured. Examples of measuring the structure of a die will now be mainly described, but examples of the embodiments are not limited thereto, and may include, e.g., other and/or alternative electronic devices. Herein, the wafer W and the die may be collectively referred to as an integrated circuit.

The wafer W may be manufactured by a semiconductor process and may include a plurality of dies. As a semiconductor process develops, the size of a die may decrease and/or the degree of integration of devices included in the die may increase. Accordingly, the die may include a small-sized structure and/or may include a complex structure. In order to verify the die (e.g., to determine whether the die manufactured by the semiconductor process has a designed structure) the structure included in the die may be measured. For example, the die may include a device, such as a transistor, and the gate (and/or the like) of the transistor may be measured. The die may include patterns respectively formed on a plurality of wiring layers, and, for example, widths of the patterns and spacing between the patterns may be measured. In at least one example, the semiconductor process may be designed such that all of the dies included in the wafer W have the same structures, but variations may occur between the wafers due to various factors and may occur between the dies included in the wafer W.

Directly measuring the structure of a die by using, e.g., a scanning electron microscope (SEM) or transmission electron microscope (TEM) may take a lot of time and accrue high costs, and thus may impair the efficiency of a semiconductor process. Additionally, measuring a structure included within a die may require destruction of the die. The spectrum may be utilized to efficiently measure the structure included in the die and perform non-destructive testing. For example, a light beam may be radiated to the wafer W, and the structure included in the die may be estimated based on the spectrum generated by the radiated light beam. Machine learning may be used to estimate the structure from the spectrum, and the accuracy of the structure measurement 10 based on the spectrum may depend on the accuracy of machine learning.

In at least one embodiment, spectrum acquisition equipment 12 may irradiate the wafer W with a light beam and may obtain the spectrum generated by the light beam. According to at least one embodiment, the spectrum acquisition equipment 12 may acquire a spectrum reflected from the wafer W and/or may acquire a spectrum penetrated through the wafer W. That is, a spectrum of light may be obtained from a light beam that has been reflected from the wafer W and/or from a light beam that has been passed through the wafer W. The spectrum acquisition equipment 12 may, for example, include a light source (e.g., a laser, a plurality of lasers, a light emitting diode, an ultraviolet (UV) source, etc.) and a photoreceptor (e.g., a photodiode, a camera, etc.). As shown in FIG. 1, the spectrum acquisition equipment 12 may provide spectrum data SPC representing the acquired spectrum to a measurement system 14. According to at least one embodiment, the spectrum acquisition equipment 12 may be installed in, e.g., a semiconductor processing equipment configured for manufacturing the wafer W. According to at least one embodiment, the spectrum acquisition equipment 12 may generate spectrum data SPC corresponding to a central portion of the wafer W and spectrum data SPC corresponding to an edge of the wafer W, respectively. According to at least one embodiment, the spectrum acquisition equipment 12 may generate spectrum data SPC corresponding to a desired specific location of the wafer W.

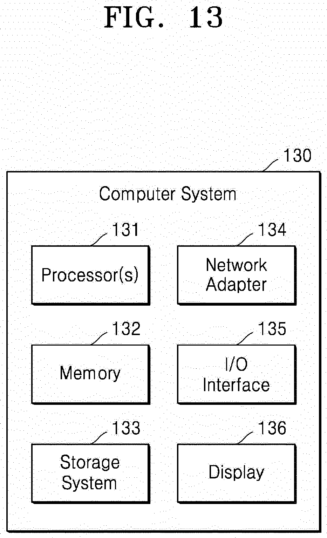

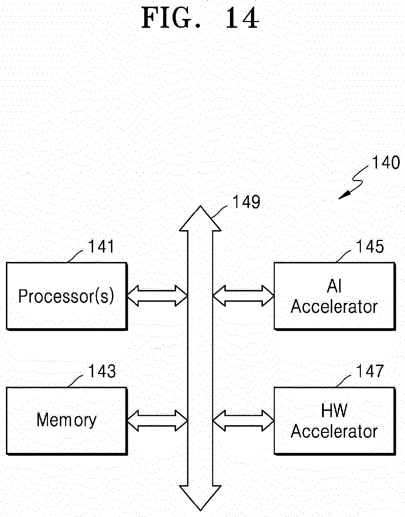

The measurement system 14 may receive the spectrum data SPC from the spectrum acquisition equipment 12 and may generate dimension data DIM representing a structure corresponding to the spectrum of the spectrum data SPC. For example, the dimension data DIM may include a value representing the size of a structure included in the die. According to at least one embodiment, the measurement system 14 may be implemented by a computing system (or referred to as a computer system) that will be described later with reference to FIGS. 13 and 14. For example, the functional blocks illustrated in the drawings may correspond to hardware, software, or a combination of hardware and software, which is included in a computing system. According to at least one embodiment, hardware may include at least one of a programmable component, such as a central processing unit (CPU), a digital signal processor (DSP), or a graphics processing unit (GPU), a reconfigurable component, such as a field programmable gate array (FPGA), and a component which provides a fixed function, such as an intellectual property (IP) block. According to at least one embodiment, software may include at least one of a series of instructions executable by a programmable component and code convertible into a series of instructions by a compiler and may be stored in, e.g., a storage medium (for instance, a non-transitory storage medium). Herein, a model based on machine learning may be simply referred to as a model.

Referring to FIG. 1, the measurement system 14 may include a machine learning model ML. The machine learning model ML may, for example, have a structure that is trainable, e.g., with training data. For example, the machine learning model may include an artificial neural network, a decision tree, a support vector machine, a Bayesian network, a genetic algorithm, and/or the like. The machine learning model ML will now be described by mainly referring to an artificial neural network, but the example embodiments are not limited thereto. Non-limiting examples of the artificial neural network may include a convolution neural network (CNN), a region based convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a fully convolutional network, a long short-term memory (LSTM) network, a classification network, and/or the like.

The machine learning model ML may be used to generate the dimension data DIM from the spectrum data SPC. For example, the dimension data DIM may be generated by processing (e.g., transforming and/or interpreting) output data of the machine learning model ML. Herein, the machine learning model ML included in the measurement system 14 may be referred to as a second model. As described above, measuring a die may require a lot of time and high costs, and thus, measured data for training the machine learning model ML may be limited.

As will be described later with reference to the drawings, the machine learning model ML may be generated and trained based on a model trained based on simulation data. The machine learning model ML may also be trained so that the output data follows the physics of the structure. Accordingly, the machine learning model ML for accurately estimating the structure of the die from the spectrum may be provided, the structure may be accurately measured without destroying the die, and the reliability of the integrated circuit may be improved. In addition, the semiconductor process may be easily adjusted or redesigned due to the efficiently measured structure, and thus, the productivity of the integrated circuit may be improved. According to at least one embodiment, production and training of the measurement system 14 may be implemented by a computing system that will be described later with reference to FIGS. 13 and 14.

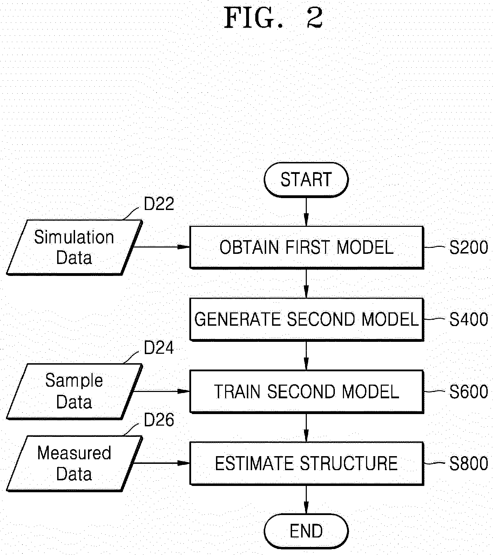

FIG. 2 is a flowchart of a method for measuring a structure, according to at least one embodiment. As shown in FIG. 2, the method for measuring the structure may include a plurality of operations S200, S400, S600, and S800. FIG. 2 will now be described with reference to FIG. 1.

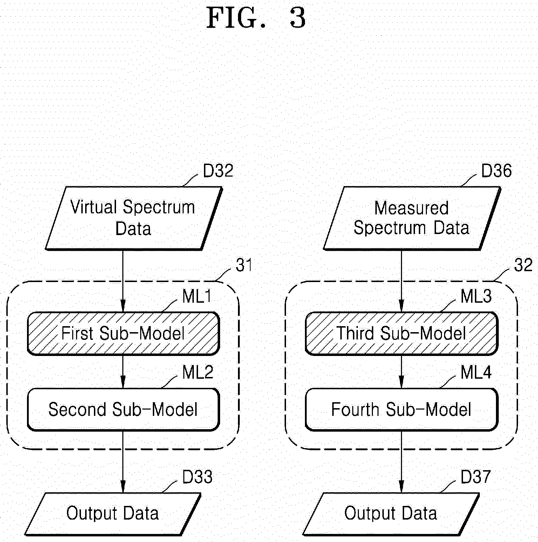

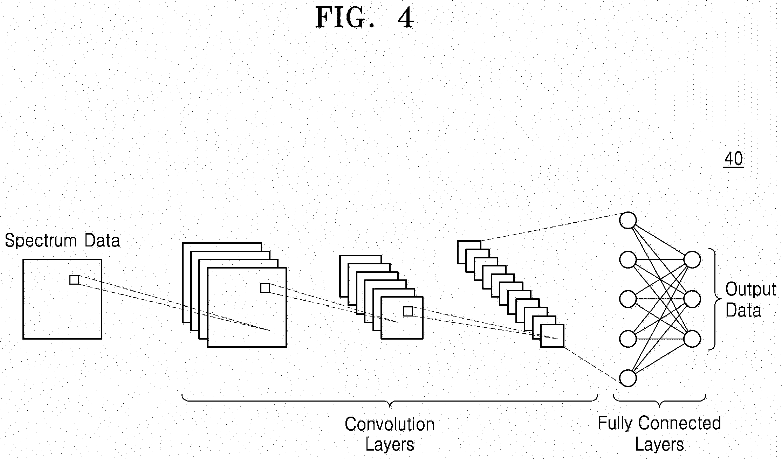

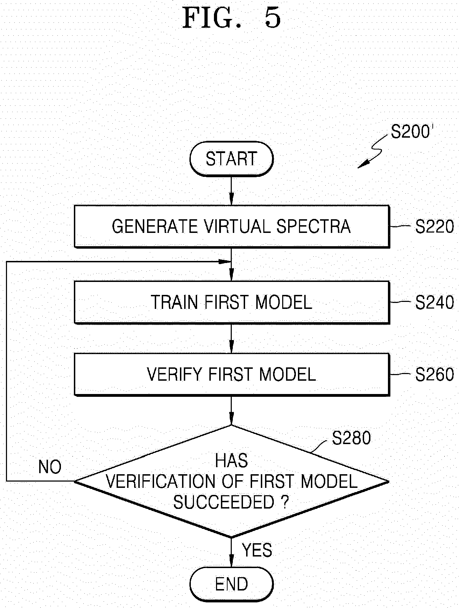

Referring to FIG. 2, in operation S200, a first model may be obtained. The first model may be used to generate and train a second model to be described later (that is, the machine learning model ML of FIG. 1). For example, the first model may have a state trained based on simulation data D22. The simulation data D22 may include data defining virtual structures and may include data defining virtual spectra generated by a simulation tool from the virtual structures. Differently from the measured data described above with reference to FIG. 1, the simulation data D22 may be easily generated by the simulation tool, and accordingly, the first model may be easily trained to output data representing a virtual structure from data defining a virtual spectrum. Examples of the first model will be described later with reference to FIGS. 3 and 4 and the like, and an example of operation S200 will be described later with reference to FIG. 5.

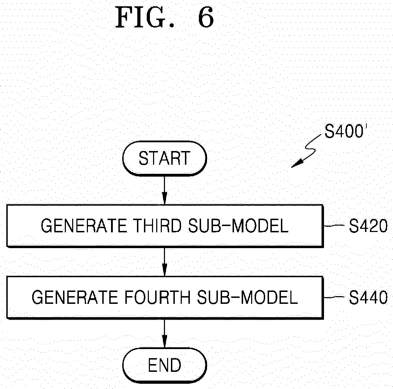

In operation S400, the second model may be generated. As described above with reference to FIG. 1, the second model may be used to estimate a structure from a measured spectrum. According to at least one embodiment, the second model may have the same structure as the first model. According to at least one embodiment, the second model may include the same portion as a portion of the first model for which training has been completed. Examples of the second model will be described later with reference to FIGS. 3 and 4, and an example of operation S400 will be described later with reference to FIG. 6.

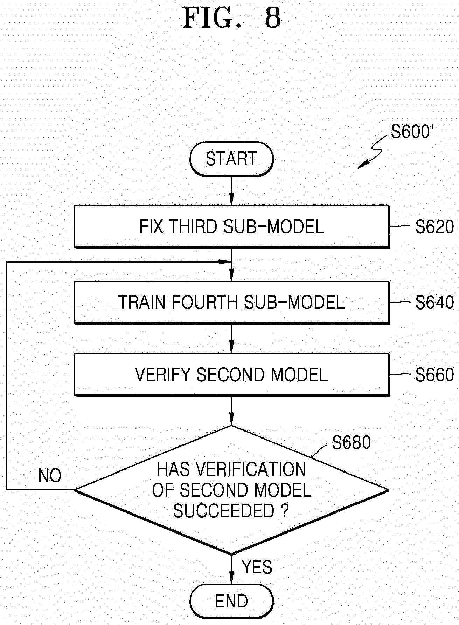

In operation S600, the second model may be trained. For example, as shown in FIG. 2, the second model generated in operation S400 may be trained based on sample data D24. The sample data D24 may include measured structure data (or sample structure data) generated by measuring a sample structure, and measured spectrum data (or sample spectrum data) generated by obtaining a spectrum of the sample structure. As described above, in operation S400, at least a portion of the second model may be generated from the first model. According to at least one embodiment, the output data of the first model as well as the sample data D24 may be used for training the second model. Accordingly, the sample data D24 including the measured data may be limited, but the second model may be successfully trained to measure the structure from the spectrum. An example of operation S600 will be described later with reference to FIG. 8.

In operation S800, the structure may be estimated. For example, as shown in FIG. 2, the structure may be estimated using the second model trained in operation S600 based on measured data D26. The measured data D26 may include measured spectrum data representing the spectrum obtained from the wafer W, for example, the spectrum data SPC of FIG. 1. The second model trained in operation S600 may generate output data representing a structure from the measured data D26, and the structure may be estimated based on the output data.

FIG. 3 is a block diagram of a first model 31 and a second model 32 according to at least one embodiment. As described above with reference to FIG. 2, the second model 32 may be used to measure the structure, and the first model 31 may be used to generate and train the second model 32. As shown in FIG. 3, the first model 31 may receive virtual spectrum data D32 and may generate output data D33. The second model 32 may receive measured spectrum data D36 and may generate output data D37.

As shown in FIG. 3, the first model 31 may include a first sub-model ML1 and a second sub-model ML2 following the first sub-model ML1. The first sub-model ML1 may receive and process the virtual spectrum data D32. According to at least one embodiment, the first sub-model ML1 may extract a feature by processing the virtual spectrum data D32 and provide data representing the feature to the second sub-model ML2 following the first sub-model ML1.

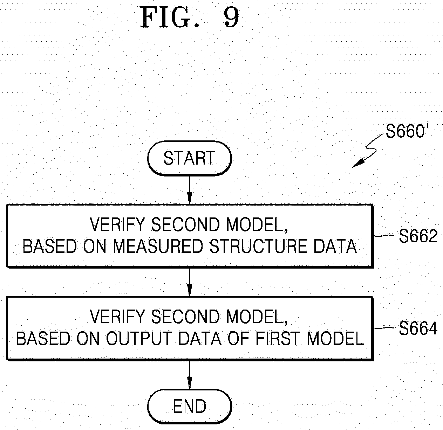

The second sub-model ML2 may process the data received from the first sub-model ML1 and may generate the output data D33. For example, the second sub-model ML2 may function as a regressor for estimating a structure from the feature indicated by the data provided by the first sub-model ML1. Accordingly, the output data D33 may include information about a virtual structure, for example, a value indicating the size of the virtual structure. According to at least one embodiment, the output data D33 may be used to train the second model 32, as will be described later with reference to FIG. 9 and the like.

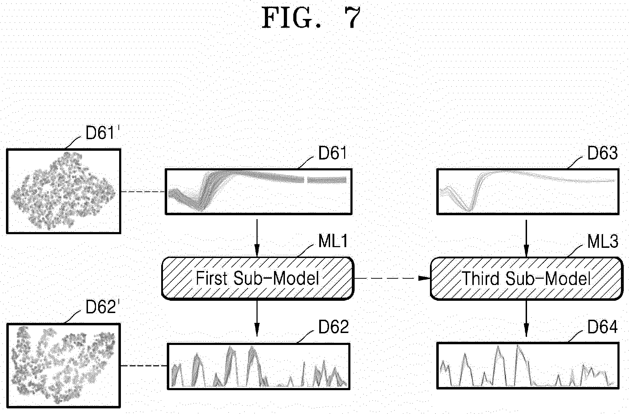

As shown in FIG. 3, the second model 32 may include a third sub-model ML3 and a fourth sub-model ML4. The third sub-model ML3 may receive and process the measured spectrum data D36. According to at least one embodiment, the third sub-model ML3 may extract a feature by processing the measured spectrum data D36 and provide data representing the feature to the fourth sub-model ML4 following the third sub-model ML3. According to at least one embodiment, the third sub-model ML3 may have the same structure as the first sub-model ML1 of the first model 31. According to at least one embodiment, as will be described later with reference to FIG. 7 and the like, the third sub-model ML3 of the second model 32 may be identical to the first sub-model ML1 of the first model 31. An example of the third sub-model ML3 will be described later with reference to FIG. 4.

The fourth sub-model ML4 may process the data received from the third sub-model ML3 and may generate the output data D37. For example, the fourth sub-model ML4 may function as a regressor for estimating a structure from the feature indicated by the data provided by the third sub-model ML3. Accordingly, the output data D37 may include information about the structure, for example, a value indicating the size of the structure. According to at least one embodiment, the fourth sub-model ML4 may have the same structure as the second sub-model ML2 of the first model 31. An example of the fourth sub-model ML4 will be described later with reference to FIG. 4.

FIG. 4 is a view illustrating a machine learning model according to at least one embodiment. According to at least one embodiment, each of the first and second models 31 and 32 may have the same structure as a model 40 of FIG. 4. As shown in FIG. 4, the model 40 may generate output data from spectrum data. FIG. 4 will now be described with reference to FIG. 3.

Referring to FIG. 4, the model 40 may include convolution layers and fully connected layers following the convolution layers. The convolution layers may extract features from the spectrum data, and the output data of the convolution layers may correspond to a representation representing the features of the spectrum. According to at least one embodiment, the convolution layers may include a different number of layers from the number of layers shown in FIG. 4. The fully connected layers may generate the output data by classifying or regressing data corresponding to the representation. According to at least one embodiment, the fully connected layers may include a different number of layers from the number of layers shown in FIG. 4.

According to at least one embodiment, each of the first sub-model ML1 and the third sub-model ML3 of FIG. 3 may include convolution layers. According to at least one embodiment, each of the second sub-model ML2 and the fourth sub-model ML4 of FIG. 3 may include fully connected layers. As described above, the convolution layers may generate the representation from the spectrum data, and thus, the first sub-model ML1 trained to generate a representation from virtual spectrum data may be employed as the third sub-model ML3 in the second model 32. The fourth sub-model ML4 may be trained based on measured spectrum data, and thus, the trained second model 32 may generate the output data D37 representing the structure from measured spectrum data, despite the measured spectrum data D36 being limited. Accordingly, embodiments leverage training based on virtual spectrum data D32 in order to more accurately train the second model 32 based on measured spectrum data. This allows a more accurate model to be trained on fewer instances of measured spectrum data D36.

FIG. 5 is a flowchart of a method for measuring a structure, according to at least one embodiment. For example, the flowchart of FIG. 5 illustrates an example of operation S200 of FIG. 2. As described above with reference to FIG. 2, in operation S200' of FIG. 5, the first model 31 may be obtained. As shown in FIG. 5, operation S200' may include a plurality of operations S220, S240, S260, and S280. FIG. 5 will now be described with reference to FIG. 3.

Referring to FIG. 5, in operation S220, virtual spectra may be generated. For example, a plurality of virtual structures may be defined, and data defining the plurality of virtual structures (e.g., virtual structure data) may be provided to a simulation tool. The simulation tool may estimate a plurality of virtual spectra respectively corresponding to the plurality of virtual structures and may generate data defining the plurality of virtual spectra (e.g., virtual spectrum data). According to at least one embodiment, the plurality of virtual structures may include a virtual structure that is the same as or similar to an actual structure, for example, a designed structure of a die included in the wafer W of FIG. 1.

In operation S240, the first model 31 may be trained. For example, the virtual spectrum data generated in operation S220 may be provided to the first model 31, and the first model 31 may be trained based on, e.g., the output data D33 of the first model 31 and the virtual structure data. According to at least one embodiment, the first model 31 may be trained to reduce an error between the output data D33 and the virtual structure data. For example, a loss function proportional to the error between the output data D33 and the virtual structure data may be defined, and the first model 31 may be trained so that a value of the loss function decreases.

In operation S260, the first model 31 may be verified. For example, the first model 31 may be verified based on the error between the output data D33 and the virtual structure data. According to at least one embodiment, the loss function proportional to the error between the output data D33 and the virtual structure data may be defined, and, when the value of the loss function decreases to no more than a predefined (or otherwise determined) threshold, the verification of the first model 31 may succeed. The verification may be based on a verification subset of the virtual spectra and virtual structure data. The verification subset may be a subset which is not used during training of the first model 31. This helps improve the accuracy of the verification.

In operation S280, it may be determined whether the verification of the first model 31 has succeeded or failed. The verification of the first model 31 may succeed if the value of the loss function (calculated during the verification operation S260) is less than or equal to a predefined (or otherwise determined) threshold. The value of the loss function calculated during the verification operation S260 may be an average of individual values of the loss function calculated for each of the verification subset. As shown in FIG. 5, in at least one embodiment, when the verification of the first model 31 succeeds, operation S200' may be concluded, and operation S400 of FIG. 2 may be subsequently performed. On the other hand, when the verification of the first model 31 fails, operation S240 may be subsequently performed. According to at least one embodiment, differently from what is shown in FIG. 5, when the verification of the first model 31 fails, operation S220 may be subsequently performed. That is, when the verification of the first model 31 fails, the method of S200' may be repeated starting from operation S220 or S240.

FIG. 6 is a flowchart of a method for measuring a structure, according to at least one embodiment. For example, the flowchart of FIG. 6 illustrates operation S400 of FIG. 2. As described above with reference to FIG. 2, in operation S400' of FIG. 6, the second model 32 may be generated. As shown in FIG. 6, operation S400' may include operation S420 and operation S440. FIG. 6 will now be described with reference to FIG. 3.

Referring to FIG. 6, in operation S420, the third sub-model ML3 may be generated. As described above with reference to FIG. 3, the second model 32 may include the third sub-model ML3 and the fourth sub-model ML4, and the third sub-model ML3 may process the measured spectrum data D36. According to at least one embodiment, the third sub-model ML3 may be generated by duplicating the first sub-model ML1 included in the trained (or verified) first model 31, and thus, the third sub-model ML3 may have the same structure and values (e.g., weights) as the first sub-model ML1. According to at least one embodiment, values of the third sub-model ML3 may be fixed while the second model 32 is being trained in operation S600 of FIG. 2, which is performed subsequent to operation S400'. An example of the third sub-model ML3 generated in operation S420 will be described later with reference to FIG. 7.

In operation S440, the fourth sub-model ML4 may be generated. As described above with reference to FIG. 3, the fourth sub-model ML4 may process the data received from the third sub-model ML3 and may generate the output data D37. According to at least one embodiment, the fourth sub-model ML4 may have the same structure as the second sub-model ML2 included in the first model 31. According to at least one embodiment, the fourth sub-model ML4 may have values (e.g., weights) of the second sub-model ML2 as initial values, and the values of the fourth sub-model ML4 may be changed while the second model 32 is being trained in operation S600 of FIG. 2 performed subsequent to operation S400'.

FIG. 7 is a view illustrating examples of a sub-model according to at least one embodiment. For example, FIG. 7 illustrates the first sub-model ML1 included in the first model 31 of FIG. 3 and the third sub-model ML3 included in the second model 32 of FIG. 3. As described above with reference to FIG. 6, the third sub-model ML3 may have the same structure and values as the first sub-model ML1 included in the trained first model 31.

Referring to FIG. 7, the trained first sub-model ML1 may generate feature data D62 from virtual spectrum data D61. According to at least one embodiment, as described above with reference to FIG. 4, the first sub-model ML1 may include convolution layers, and may generate the feature data D62 representing a feature of the virtual spectrum data D61. In the illustrated example, a specific rule is not found from data D61' into which the virtual spectral data D61 is converted through t-distributed stochastic neighbor embedding (t-SNE), whereas a specific rule may be found from data D62' into which the feature data D62 is converted through t-SNE data. In other words, the feature data D62 may represent a representation of a virtual spectrum.

The first sub-model ML1 for extracting the representation from the virtual spectrum may be used to extract a representation from a measured spectrum. For example, as shown in FIG. 7, the third sub-model ML3 may be generated from the first sub-model ML1 and may have the same (or substantially similar) structure and values as the first sub-model ML1. For example, as shown in FIG. 7, generating at least a portion of a model from at least a portion of another model may be referred to as transfer learning or transfer training. According to at least one embodiment, the third sub-model ML3 may be transfer trained to include convolution layers like the first sub-model ML1 and may generate feature data D64 representing a feature of measured spectrum data D63. As will be described later with reference to FIG. 8, the third sub-model ML3 may be fixed while the second model 32 is being trained.

FIG. 8 is a flowchart of a method for measuring a structure, according to at least one embodiment. For example, the flowchart of FIG. 8 illustrates an example of operation S600 of FIG. 2. As described above with reference to FIG. 2, in operation S600' of FIG. 8, the second model 32 may be trained. As shown in FIG. 8, operation S600' may include a plurality of operations S620, S640, S660, and S680. FIG. 8 will now be described with reference to FIGS. 3 and 7.

Referring to FIG. 8, in operation S620, the third sub-model ML3 may be fixed. As described above with reference to FIGS. 6 and 7, the third sub-model ML3 may be the same as (or substantially similar to) the first sub-model ML1 included in the trained first model 31, and the feature data D64 may be generated from the measured spectrum data D63. Accordingly, the feature of the spectrum may be appropriately extracted from the third sub-model ML3 despite limited measured data, and values (e.g., weights) of the third sub-model ML3 may be fixed while the second model 32 is being trained.

In operation S640, the fourth sub-model ML4 may be trained. As described above with reference to FIG. 6, the fourth sub-model ML4 may have the same (or substantially similar) structure as the second sub-model ML2 of the first model 31. Unlike the third sub-model ML3 fixed in operation S620, the fourth sub-model ML4 may be trained based on measured data. According to at least one embodiment, the fourth sub-model ML4 may include, as initial values, the values included in the second sub-model ML2 of the trained first model 31. According to at least one embodiment, the second model 32 (or the fourth sub-model ML4) may be trained to reduce an error between the output data D37 and the measured structure data. For example, a loss function proportional to the error between the output data D37 and the measured structure data may be defined, and the second model 32 may be trained so that a value of the loss function decreases. According to at least one embodiment, the second model 32 may be trained to follow the physics as will be described later with reference to FIG. 9, and, to this end, a loss function that increases as the output data D37 of the second model 32 deviates from the physics may be defined.

In operation S660, the second model 32 may be verified. According to at least one embodiment, the second model 32 may be verified based on the measured data. The verification may be based on a verification subset of the measured data. The verification subset may be a subset which is not used during training of the second model 32. According to at least one embodiment, the second model 32 may be verified based on the output data D33 of the first model 31. An example of operation S660 will be described later with reference to FIG. 9.

In operation S680, it may be determined whether the verification of the second model 32 succeeds or fails. As shown in FIG. 8, when the verification of the second model 32 succeeds, operation S600' may be concluded, and operation S800 of FIG. 2 may be subsequently performed; and/or, when the verification of the second model 32 fails, operation S640 may be subsequently repeated (or performed) (e.g. the method of S600' may be repeated from S640).

FIG. 9 is a flowchart of a method for measuring a structure, according to at least one embodiment. For example, the flowchart of FIG. 9 illustrates an example of operation S660 of FIG. 8. As described above with reference to FIG. 8, in operation S660' of FIG. 9, the second model 32 may be verified. As shown in FIG. 9, operation S660' may include operation S662 and operation S664. FIG. 9 will now be described with reference to FIG. 3.

Referring to FIG. 9, the second model 32 may be verified based on the measured structure data, in operation S662. For example, the second model 32 may be trained based on the measured data, and the measured data may include measured structure data generated by measuring a sample structure and measured spectrum data generated by obtaining a spectrum generated from the sample structure. According to at least one embodiment, the loss function proportional to an error between the output data D37 and the measured structure data may be defined, and, when the value of the loss function decreases to no more than a predefined threshold, the verification of the second model 32 may succeed, in operation S662. For example, a loss function $L_0$ may be defined as in Equation 1 below, and the second model 32 may be trained to decrease the loss function $L_0$.

[Equation 1]

$$L_0(g) = MSE(g(x_{HW}), y_{HW})$$

In Equation 1, g indicates the second model 32, $x_{HW}$ indicates measured spectrum data, $y_{HW}$ indicates measured structure data, and MSE indicates a mean squared error.

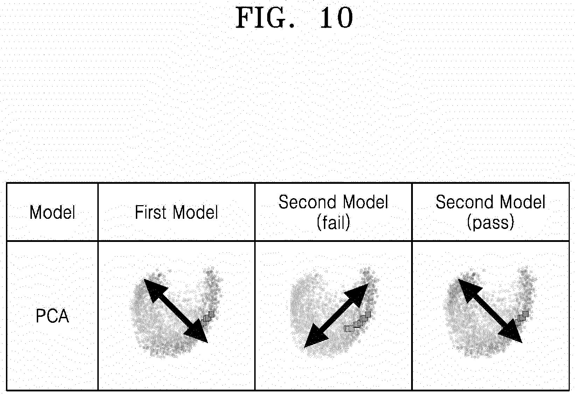

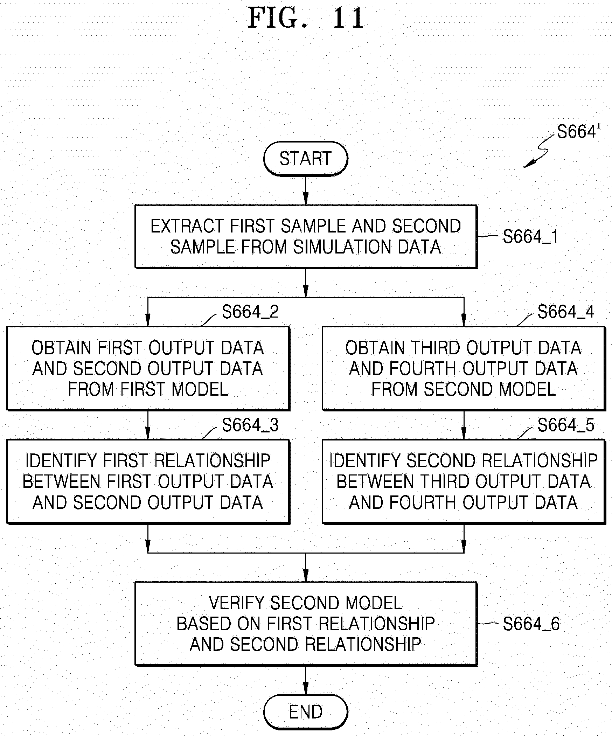

In operation S664, the second model 32 may be verified based on the output data D33 of the first model 31. When the second model 32 is trained based on a loss function, such as Equation 1, as will be described later with reference to FIG. 10, the output data D33 of the trained second model 32 may not conform to the physics. Simulation data may be generated by a simulation tool that performs a simulation based on the physics, and the first model 31 trained based on the simulation data may have a state trained to conform to the physics. Accordingly, the second model 32 may be verified and trained based on the output data D33 of the first model 31 and may have a state trained to conform to the physics. As such, training a model to conform to the physics may be referred to as physics guided learning. An example of operation S664 will be described later with reference to FIG. 11. In an example, the second model 32 may be verified based on the output data D33 of the trained second model 32 and at least one of the output data D33 of the first model 31 and the measured structure data.

FIG. 10 is a table showing examples of output data of a model according to at least one embodiment. For example, FIG. 10 illustrates output data of a first model, output data of a second model that has failed the verification, and output data of the second model that has passed the verification. FIG. 10 shows output data as distributions transformed according to principal component analysis (PCA).

Referring to FIG. 10, the output data of the first model may have a certain rule. For example, as shown in FIG. 10, the PCA distribution of the first model may vary along a diagonal line having a negative slope. The PCA distribution of the second model that has failed the verification may vary along a diagonal line having a positive slope, whereas the PCA distribution of the second model that has passed the verification may vary along the diagonal line having a negative slope, like the first model. An example of a method of training the second model so that the second model passes verification will be described later with reference to FIG. 11.

FIG. 11 is a flowchart of a method for measuring a structure, according to at least one embodiment. For example, the flowchart of FIG. 11 illustrates an example of operation S664 of FIG. 9. As described above with reference to FIG. 9, the second model 32 may be verified based on the output data D33 of the first model 31, in operation S664'. As shown in FIG. 11, operation S664' may include a plurality of operations S664_1 through S664_6. FIG. 11 will now be described with reference to FIG. 3.

Referring to FIG. 11, a first sample and a second sample may be extracted from the simulation data, in operation S664_1. For example, a first sample and a second sample corresponding to different virtual structures may be extracted from the virtual structure data included in the simulation data.

In operation S664_2, first output data and second output data may be obtained from the first model 31. For example, the first sample may be provided to the first model 31, and the first model 31 may generate first output data corresponding to the first sample. The second sample may be provided to the first model 31, and the first model 31 may generate second output data corresponding to the second sample.

In operation S664_3, a first relationship between the first output data and the second output data may be identified. When the first sample and the second sample extracted in operation S664_1 have a specific relationship, the first output data and the second output data (corresponding to the first sample and the second sample, respectively) may have the first relationship in order to comply with the physics. For example, the first relationship may mean that the second output data is greater than the first output data as in Equation 2 below.

[Equation 2]

$$f(x_i) < f(x_j)$$

In Equation 2, f indicates the first model 31, $x_i$ indicates the first sample, and $x_j$ indicates the second sample. As will be described later, the second model 32 may be verified based on whether a second relationship identified from the second model 32 corresponds to the first relationship.

In operation S664_4, third output data and fourth output data may be obtained from the second model 32. For example, the first sample may be provided to the second model 32, and the second model 32 may generate third output data corresponding to the first sample. The second sample may be provided to the second model 32, and the second model 32 may generate fourth output data corresponding to the second sample.

In operation S664_5, a second relationship between the third output data and the fourth output data may be identified. For example, the second relationship may be a relationship between the third output data and the fourth output data.

In operation S664_6, the second model 32 may be verified based on the first relationship and the second relationship. For example, when the first relationship and the second relationship have the same (or substantially similar) properties, verification of the second model 32 may be determined to have succeeded, and, when the first relationship and the second relationship do not have the same (or substantially similar) properties, it may be determined that the verification of the second model 32 has failed. For example, when the first relationship is identified as in Equation 2 and the second relationship is defined as Equation 3 below, it may be determined that the verification of the second model 32 succeeds, in operation S664'.

$$[Equation 3]$$

$$g(x_i) < g(x_j)$$

According to at least one embodiment, the second model 32 may be trained to comply with the physics. For example, the second model 32 may be trained such that a loss proportional to an error (e.g., a degree to which the second relationship deviates from the first relationship) between the first relationship and the second relationship decreases. For example, the loss function may be defined to increase when the output data D37 of the second model 32 does not comply with the physics. That is, the loss function may be defined to increase when the error (e.g., the degree to which the second relationship deviates from the first relationship) between the first relationship and the second relationship increases. According to at least one embodiment, a loss function L for training the second model 32 may be defined as in Equation 4 below, and the second model 32 may be trained to decrease the loss function L.

$$[Equation 4]$$

$$L(g) = \lambda L_0 + (1 - \lambda) L_{Phys}(f, g)$$

$$= \lambda MSE(g(x_{HW}), y_{HW}) +$$

$$(1 - \lambda) \sum_{where \ f(x_i) < f(x_j)} ReLU\left(g(x_i) - g(x_j)\right)$$

In Equation 4, $\lambda$ indicates a weight and is a positive real number less than 1 ($0 < \lambda < 1$), $L_{Phys}(f,g)$ is the loss function for the error between the first relationship and the second relationship, and ReLU is a rectified Linear Unit (ReLU) function. A value of the rectified Linear Unit (ReLU) function may be 0 when $g(x_i)-g(x_j)$ is zero or negative and may be $g(x_i)-g(x_j)$ when $g(x_i)-g(x_j)$ is positive. Thus, when the second relationship obeys the first relationship, the value of the ReLU function may be zero, whereas, when the second relationship does not obey the first relationship, the ReLU function may have a value proportional to a degree to which the second relationship deviates from the first relationship. The loss function of Equation 4 applies for the situation where $f(x_i)$ is less than $f(x_j)$. In the event that $f(x_i)$ is greater than $f(x_j)$, then an alternative loss function may be utilized where the ReLU function applies to $g(x_j)-g(x_i)$ instead.

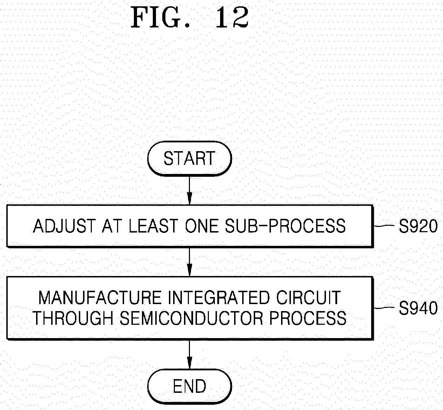

FIG. 12 is a flowchart of a method for measuring a structure, according to at least one embodiment. For example, the flowchart of FIG. 12 illustrates a method of manufacturing an integrated circuit. As shown in FIG. 12, the method of manufacturing an integrated circuit may include operation S920 and operation S940. According to at least one embodiment, operations S920 and S940 of FIG. 12 may be performed subsequent to operation S800 of FIG. 2. FIG. 12 will now be described with reference to FIGS. 1 and 2.

A semiconductor process for manufacturing the wafer W may include a series of sub-processes. For example, a front-end-of-line (FEOL) may include an operation of planarizing and cleaning a wafer, an operation of forming a trench, an operation of forming a well, an operation of forming a gate electrode, an operation of forming a source and a drain, etc.

Individual devices (such as a transistor, a capacitor, a resistor, and/or the like) may be formed on a substrate according to the FEOL. A back-end-of-line (BEOL) may include an operation of silicidating (e.g. forming a silicide in) a gate region, a source region, and a drain region, an operation of adding a dielectric, a planarization operation, an operation of forming a hole, an operation of adding a metal layer, an operation of forming a via, and an operation of forming a passivation layer, etc. Individual devices (such as a transistor, a capacitor, a resistor, and/or the like), may be connected to one another according to the BEOL. According to at least one embodiment, a middle-end-of-line (MEOL) may be performed between the FEOL and the BEOL, and contacts may be formed on the individual devices. A plurality of dies may be separated from the wafer W, and each of the plurality of dies may be packaged into a semiconductor package and used as a component of various applications.

Referring to FIG. 12, at least one sub-process may be adjusted in operation S920. For example, when the structure estimated in operation S800 of FIG. 2 is different from a designed structure, at least one of the series of sub-processes included in the semiconductor process for manufacturing the wafer W may be adjusted. For example, a mask used for patterning may be re-fabricated, the composition and/or concentration of a gas may be changed, an exposure time may be changed, a temperature and/or pressure may be changed, etc.

In operation S940, the integrated circuit may be manufactured through the semiconductor process. For example, the semiconductor process may include the at least one sub-process adjusted in operation S920, and accordingly, the integrated circuit may be manufactured to have the designed structure. The manufacturing may be performed by issuing instructions to one or more semiconductor manufacturing devices to manufacture the integrated circuit according to the semiconductor process. An output may be issued in the form of instructions (e.g. computer-executable instructions) for instructing one or more machines to manufacture an integrated circuit according through the semiconductor process. Alternatively, instead of manufacturing the integrated circuit through the semiconductor process locally, instructions for manufacturing the integrated circuit according to the semiconductor process may be output to an external system for use in manufacturing the integrated circuit.

FIG. 13 is a block diagram of a computer system 130 according to at least one embodiment. According to at least one embodiment, the computer system 130 of FIG. 13 may perform training of machine learning models used in the structure measurement described above with reference to the drawings and may be referred to as a measurement system or a training system.

The computer system 130 may refer to a system including a general-purpose and/or special-purpose computing system. For example, the computer system 130 may include a personal computer (PC), a server computer, a laptop computer, an appliance product, and/or the like. Referring to FIG. 13, the computer system 130 may include at least one processor 131, a memory 132, a storage system 133, a network adapter 134, an input/output (I/O) interface 135, and a display 136.

The at least one processor 131 may execute a program module including an instruction executable by a computer system. The program module may include, for example, routines, programs, objects, components, a logic, a data structure, etc., which perform a certain operation or implement a certain data format based on, inputs, commands, and/or the like. The memory 132 may include a computer system-readable medium of a volatile memory type such as random-access memory (RAM). The at least one processor 131 may access the memory 132 and may execute instructions loaded into the memory 132. The storage system 133 may non-volatilely store information, and according to at least one embodiment, may include at least one program product including a program module configured to perform training of machine learning models for the structure measurement described above with reference to the drawings. Non-limiting examples of a program may include an operating system (OS), at least one application, other program modules, and other program data. The memory 132 and/or the storage system 133 may be (or include), for example, a non-transitory computer readable media. The term "non-transitory," as used herein, is a description of the medium itself (e.g., as tangible, and not a signal) as opposed to a limitation on data storage persistency (e.g., RAM vs. ROM). For example, the computer-readable recording medium may be any tangible medium that can store or include the program in or connected to an instruction execution system, equipment, or device.

The network adapter 134 may provide access to a network comprising other computer systems. For example, the network adaptor 134 may provide access to a local area network (LAN), a wide area network (WAN), a common network (for example, the Internet), and/or the like. The I/O interface 135 may provide a communication channel for communication with a peripheral device, such as a keyboard, a pointing device, an audio system, and/or the like. The display 136 may output various pieces of information for a user to check.

According to at least one embodiment, training of machine learning models for the structure measurement described above with reference to the drawings may be implemented as a computer program product. The computer program product may include a non-transitory computer-readable medium (or a storage medium) including computer-readable program instructions for allowing the at least one processor 131 to perform image processing and/or training of models. The computer-readable instruction may include, for example, an assembler instruction, an instruction set architecture (ISA) instruction, a machine instruction, a machine dependent instruction, micro-code, a firmware instruction, state setting data, source code or object code written in at least one programming language, and/or the like.

The computer-readable medium may be a type of medium for non-temporarily keeping and storing instructions executed by the at least one processor 131 or an arbitrary instruction-executable device. For example, the computer-readable medium may be, but is not limited to, an electronic storage device, a magnetic storage device, an optical storage device, an electromagnetic storage device, a semiconductor storage device, a combination thereof, and/or the like. For example, the computer-readable medium may be a portable computer disk, a hard disk, RAM, read-only memory (ROM), electrically erasable read only memory (EEPROM), flash memory, static RAM (SRAM), a compact disk (CD), a digital video disk (DVD), a memory stick, a floppy disk, a mechanically encoded device (such as a punch card), or a combination thereof.

FIG. 14 is a block diagram of a system 140 according to at least one embodiment. According to at least one embodiment, a structure measurement according to at least one embodiment may be executed by the system 140.

Referring to FIG. 14, the system 140 may include at least one processor 141, a memory 143, an artificial intelligence (AI) accelerator 145, and a hardware (HW) accelerator 147, and the at least one processor 141, the memory 143, the AI accelerator 145, and the hardware accelerator 147 may communicate with one another through a bus 149. According to at least one embodiment, the at least one processor 141, the memory 143, the AI accelerator 145, and the hardware accelerator 147 may be included in one semiconductor chip. According to at least one embodiment, at least two of the at least one processor 141, the memory 143, the AI accelerator 145, and the hardware accelerator 147 may be included in each of two or more semiconductor chips mounted on a board.

The at least one processor 141 may execute instructions. For example, the at least one processor 141 may execute instructions stored in the memory 143 to execute an OS or applications executed on the OS. According to at least one embodiment, the at least one processor 141 may execute instructions to instruct the AI accelerator 145 and/or the hardware accelerator 147 to perform an operation, and to obtain a performance result of the operation from the AI accelerator 145 and/or the hardware accelerator 147. According to at least one embodiment, the at least one processor 141 may be an application specific instruction set processor (ASIP) customized for a certain purpose and may support a dedicated instruction set.

The memory 143 may have a structure which is configured to store data. For example, the memory 143 may include a volatile memory device, such as dynamic RAM (DRAM) or SRAM, and moreover, may include a non-volatile memory device, such as flash memory, resistive RAM (RRAM), and/or the like. The at least one processor 141, the AI accelerator 145, and the hardware accelerator 147 may store data in the memory 143 through the bus 149 or may read the data from the memory 143.

The AI accelerator 145 may refer to hardware designed for AI applications. According to at least one embodiment, the AI accelerator 145 may include a neural processing unit (NPU) for implementing a neuromorphic structure and may generate output data by processing input data provided from the at least one processor 141 and/or the hardware accelerator 147 and may provide the output data to the at least one processor 141 and/or the hardware accelerator 147. According to at least one embodiment, the AI accelerator 145 may be programmable and may be programmed by the at least one processor 141 and/or the hardware accelerator 147.

The hardware accelerator 147 may be referred to as hardware designed to perform a certain operation at a high speed. For example, the hardware accelerator 147 may be designed to perform data conversion, such as demodulation, modulation, encoding, decoding, etc., at a high speed. The hardware accelerator 147 may be programmable and may be programmed by the at least one processor 141 and/or the hardware accelerator 147.

According to at least one embodiment, the AI accelerator 145 may execute the machine learning models described above with reference to the drawings. For example, the AI accelerator 145 may execute each of the layers described above. The AI accelerator 145 may process an input parameter, a feature map, and/or the like to generate an output including useful information. According to at least one embodiment, at least some of models executed by the AI accelerator 145 may be executed by the at least one processor 141 and/or the hardware accelerator 147.

While the inventive concepts have been particularly shown and described with reference to some embodiments thereof, it will be understood that various changes in form and details may be made therein without departing from the scope of the following claims, which define the scope of protection for the present invention.

**Claims**

1. A computer-implemented method for measuring a structure based on a spectrum of the structure, the method comprising:

    obtaining (S200) a first model trained based on simulation data, the first model including a first sub-model and a second sub-model following the first sub-model;
    generating (S400) a second model such that the second model includes a third sub-model generated from at least a portion of the first sub-model;

training (S600) the second model based on sample spectrum data generated by measuring spectra of sample structures;

estimating (S800), based on the trained second model, the structure from measured spectrum data generated by measuring the spectrum of the structure; and

verifying the second model based on output data of the first model and output data of the second model, **characterized in that**

the verifying the second model comprises:

> extracting a first sample and a second sample from the simulation data;
> obtaining first output data and second output data of the first model, the first output data and the second output data respectively corresponding to the first sample and the second sample;
> obtaining third output data and fourth output data of the second model, the third output data and the fourth output data respectively corresponding to the first sample and the second sample; and
> verifying the second model based on a first relationship between the first output data and the second output data and a second relationship between the third output data and the fourth output data, and

wherein the training (S600) the second model is repeated when the verification of the second model fails.

2. The method of claim 1, wherein the obtaining (S200) the first model comprises:

generating virtual spectra by simulating virtual structures; and
wherein the simulation data represents the virtual structures and the virtual spectra.

3. The method of claim 2, wherein the obtaining (S200) the first model comprises verifying the first model based on an error between output data of the first model and the simulation data.

4. The method of any preceding claim, wherein:

the second model further comprises a fourth sub-model following the third sub-model; and
the training (S600) the second model comprises training the fourth sub-model based on the sample spectrum data while fixing the third sub-model such that the third sub-model is not trained.

5. The method of claim 4, wherein:

each of the first sub-model and the third sub-model comprises a convolution network; and
each of the second sub-model and the fourth sub-model comprises a fully connected network.

6. The method of any preceding claim, further comprising:
verifying the second model based on an error between output data of the second model and measured structure data of the sample structures.

7. The method of any preceding claim, wherein the training the second model comprises training the second model such that a loss proportional to an error between the first relationship and the second relationship decreases.

8. The method of any preceding claim, further comprising:

adjusting at least one sub-process based on the estimated structure; and
manufacturing an integrated circuit through a semiconductor process comprising the adjusted at least one sub-process.

9. A system comprising:

at least one processor; and
a storage medium storing instructions which, when executed by the at least one processor, instruct the at least one processor to perform measurement of a structure based on a spectrum of the structure,
wherein the measurement of the structure comprises:

> obtaining (S200) a first model trained based on simulation data, the first model including a first sub-model and a second sub-model following the first sub-model;

generating (S400) a second model such that the second model includes a third sub-model generated from at least a portion of the first sub-model;

training (S600) the second model based on sample spectrum data generated by measuring spectra of sample structures;

estimating (S800), based on the trained second model, the structure from measured spectrum data generated by measuring the spectrum of the structure; and

verifying the second model based on output data of the first model and output data of the second model, **characterized in that**

the verifying the second model comprises:

extracting a first sample and a second sample from the simulation data;

obtaining first output data and second output data of the first model, the first output data and the second output data respectively corresponding to the first sample and the second sample;

obtaining third output data and fourth output data of the second model, the third output data and the fourth output data respectively corresponding to the first sample and the second sample; and

verifying the second model based on a first relationship between the first output data and the second output data and a second relationship between the third output data and the fourth output data, and

wherein the training the second model is repeated when the verification of the second model fails.

10. The system of claim 9, wherein the obtaining (S200) the first model comprises generating virtual spectra by simulating virtual structures, wherein the simulation data represents the virtual structures and the virtual spectra.

11. The system of claim 10, wherein the obtaining (S200) the first model comprises verifying the first model based on an error between output data of the first model and the simulation data.

12. The system of any of claims 9-11, wherein:

the second model further comprises a fourth sub-model following the third sub-model; and

the training the second model comprises training the fourth sub-model based on the sample spectrum data while fixing the third sub-model such that the third sub-model is not trained.

13. The system of claim 12, wherein:

each of the first sub-model and the third sub-model comprises a convolution network; and

each of the second sub-model and the fourth sub-model comprises a fully connected network.

14. The system of any of claims 9-13, wherein the measurement of the structure further comprises verifying the second model based on an error between output data of the second model and measured structure data of the sample structures.

## Patentansprüche

1. Computerimplementiertes Verfahren zum Messen einer Struktur basierend auf einem Spektrum der Struktur, wobei das Verfahren Folgendes umfasst:

Erhalten (S200) eines ersten Modells, das basierend auf Simulationsdaten trainiert wurde, wobei das erste Modell ein erstes Untermodell und ein zweites Untermodell beinhaltet, das dem ersten Untermodell folgt;

Generieren (S400) eines zweiten Modells, sodass das zweite Modell ein drittes Untermodell beinhaltet, das aus mindestens einem Teil des ersten Untermodells generiert wurde;

Trainieren (S600) des zweiten Modells basierend auf Probenspektrumdaten, die durch Messen von Spektren von Probenstrukturen generiert wurden;

Schätzen (S800) der Struktur basierend auf dem trainierten zweiten Modell aus gemessenen Spektrumdaten, die durch Messen des Spektrums der Struktur generiert wurden; und

Verifizieren des zweiten Modells basierend auf Ausgabedaten des ersten Modells und Ausgabedaten des zweiten Modells,

**dadurch gekennzeichnet, dass**
das Verifizieren des zweiten Modells umfasst:

Extrahieren einer ersten Probe und einer zweiten Probe aus den Simulationsdaten;
Erhalten erster Ausgabedaten und zweiter Ausgabedaten des ersten Modells, wobei die ersten Ausgabedaten und die zweiten Ausgabedaten der ersten Probe beziehungsweise der zweiten Probe entsprechen;
Erhalten dritter Ausgabedaten und vierter Ausgabedaten des zweiten Modells, wobei die dritten Ausgabedaten und die vierten Ausgabedaten der ersten Probe beziehungsweise der zweiten Probe entsprechen; und
Verifizieren des zweiten Modells basierend auf einer ersten Beziehung zwischen den ersten Ausgabedaten und den zweiten Ausgabedaten und einer zweiten Beziehung zwischen den dritten Ausgabedaten und den vierten Ausgabedaten und

wobei das Trainieren (S600) des zweiten Modells wiederholt wird, wenn die Verifizierung des zweiten Modells fehlschlägt.

2. Verfahren nach Anspruch 1, wobei das Erhalten (S200) des ersten Modells umfasst:

Generieren virtueller Spektren durch Simulation virtueller Strukturen; und
wobei die Simulationsdaten die virtuellen Strukturen und die virtuellen Spektren darstellen.

3. Verfahren nach Anspruch 2, wobei das Erhalten (S200) des ersten Modells Verifizieren des ersten Modells basierend auf einem Fehler zwischen Ausgabedaten des ersten Modells und den Simulationsdaten umfasst.

4. Verfahren nach einem vorstehenden Anspruch, wobei:

das zweite Modell weiter ein viertes Untermodell umfasst, das dem dritten Untermodell folgt; und
das Trainieren (S600) des zweiten Modells Trainieren des vierten Untermodells basierend auf den Probenspektrumdaten umfasst, während das dritte Untermodell so fixiert wird, dass das dritte Untermodell nicht trainiert wird.

5. Verfahren nach Anspruch 4, wobei

das erste und das dritte Untermodell jeweils ein Faltungsnetzwerk umfassen; und
sowohl das zweite als auch das vierte Untermodell ein vollständig verbundenes Netzwerk umfassen.

6. Verfahren nach einem vorstehenden Anspruch, das weiter Folgendes umfasst:
Verifizieren des zweiten Modells basierend auf einem Fehler zwischen Ausgabedaten des zweiten Modells und gemessenen Strukturdaten der Probenstrukturen.

7. Verfahren nach einem vorstehenden Anspruch, wobei das Trainieren des zweiten Modells Trainieren des zweiten Modells derart umfasst, dass ein Verlust proportional zu einem Fehler zwischen der ersten Beziehung und der zweiten Beziehung abnimmt.

8. Verfahren nach einem vorstehenden Anspruch, das weiter Folgendes umfasst:

Anpassen mindestens eines Unterprozesses basierend auf der geschätzten Struktur; und
Herstellen einer integrierten Schaltung durch einen Halbleiterprozess, der den angepassten mindestens einen Unterprozess umfasst.

9. System, umfassend:

mindestens einen Prozessor; und
ein Speichermedium, das Anweisungen speichert, die, wenn sie von dem mindestens einen Prozessor ausgeführt werden, den mindestens einen Prozessor anweisen, eine Messung einer Struktur basierend auf einem Spektrum der Struktur durchzuführen,
wobei die Messung der Struktur umfasst:

Erhalten (S200) eines ersten Modells, das basierend auf Simulationsdaten trainiert wurde, wobei das erste Modell ein erstes Untermodell und ein zweites Untermodell beinhaltet, das dem ersten Untermodell folgt;

Generieren (S400) eines zweiten Modells, sodass das zweite Modell ein drittes Untermodell beinhaltet, das aus mindestens einem Teil des ersten Untermodells generiert wurde;

Trainieren (S600) des zweiten Modells basierend auf Probenspektrumdaten, die durch Messen von Spektren von Probenstrukturen generiert wurden;

Schätzen (S800) der Struktur basierend auf dem trainierten zweiten Modell aus gemessenen Spektrumdaten, die durch Messen des Spektrums der Struktur generiert wurden; und

Verifizieren des zweiten Modells basierend auf Ausgabedaten des ersten Modells und Ausgabedaten des zweiten Modells,

**dadurch gekennzeichnet, dass**

das Verifizieren des zweiten Modells umfasst:

Extrahieren einer ersten Probe und einer zweiten Probe aus den Simulationsdaten;

Erhalten erster Ausgabedaten und zweiter Ausgabedaten des ersten Modells, wobei die ersten Ausgabedaten und die zweiten Ausgabedaten der ersten Probe beziehungsweise der zweiten Probe entsprechen;

Erhalten dritter Ausgabedaten und vierter Ausgabedaten des zweiten Modells, wobei die dritten Ausgabedaten und die vierten Ausgabedaten der ersten Probe beziehungsweise der zweiten Probe entsprechen; und

Verifizieren des zweiten Modells basierend auf einer ersten Beziehung zwischen den ersten Ausgabedaten und den zweiten Ausgabedaten und einer zweiten Beziehung zwischen den dritten Ausgabedaten und den vierten Ausgabedaten und

wobei das Training des zweiten Modells wiederholt wird, wenn die Verifizierung des zweiten Modells fehlschlägt.

10. System nach Anspruch 9, wobei das Erhalten (S200) des ersten Modells Generieren virtueller Spektren durch Simulieren virtueller Strukturen umfasst, wobei die Simulationsdaten die virtuellen Strukturen und die virtuellen Spektren darstellen.

11. System nach Anspruch 10, wobei das Erhalten (S200) des ersten Modells Verifizieren des ersten Modells basierend auf einem Fehler zwischen Ausgabedaten des ersten Modells und den Simulationsdaten umfasst.

12. System nach einem der Ansprüche 9-11, wobei:

das zweite Modell weiter ein viertes Untermodell umfasst, das dem dritten Untermodell folgt; und

das Trainieren des zweiten Modells Trainieren des vierten Untermodells basierend auf den Probenspektrumdaten umfasst, während das dritte Untermodell so fixiert wird, dass das dritte Untermodell nicht trainiert wird.

13. System nach Anspruch 12, wobei:

das erste und das dritte Untermodell jeweils ein Faltungsnetzwerk umfassen; und

sowohl das zweite als auch das vierte Untermodell ein vollständig verbundenes Netzwerk umfassen.

14. System nach einem der Ansprüche 9-13, wobei die Messung der Struktur weiter umfasst

Verifizieren des zweiten Modells basierend auf einem Fehler zwischen Ausgabedaten des zweiten Modells und gemessenen Strukturdaten der Probenstrukturen.

## Revendications

1. Procédé mis en œuvre par ordinateur pour mesurer une structure sur la base d'un spectre de la structure, le procédé comprenant :

l'obtention (S200) d'un premier modèle entraîné sur la base de données de simulation, le premier modèle incluant un premier sous-modèle et un deuxième sous-modèle suivant le premier sous-modèle ;

la génération (S400) d'un second modèle de telle sorte que le second modèle inclue un troisième sous-modèle généré à partir d'au moins une partie du premier sous-modèle ;

l'entraînement (S600) du second modèle sur la base de données de spectre d'échantillon générées en mesurant des spectres de structures d'échantillon ;

l'estimation (S800), sur la base du second modèle entraîné, de la structure à partir de données de spectre mesurées générées en mesurant le spectre de la structure ; et

la vérification du second modèle sur la base de données de sortie du premier modèle et de données de sortie du second modèle,

**caractérisé en ce que**

la vérification du second modèle comprend :

l'extraction d'un premier échantillon et d'un second échantillon des données de simulation ;

l'obtention de premières données de sortie et de deuxièmes données de sortie du premier modèle, les premières données de sortie et les deuxièmes données de sortie correspondant respectivement au premier échantillon et au second échantillon ;

l'obtention de troisièmes données de sortie et de quatrièmes données de sortie du second modèle, les troisièmes données de sortie et les quatrièmes données de sortie correspondant respectivement au premier échantillon et au second échantillon ; et

la vérification du second modèle sur la base d'une première relation entre les premières données de sortie et les deuxièmes données de sortie et d'une seconde relation entre les troisièmes données de sortie et les quatrièmes données de sortie, et

dans lequel l'entraînement (S600) du second modèle est répété lorsque la vérification du second modèle échoue.

2. Procédé selon la revendication 1, dans lequel l'obtention (S200) du premier modèle comprend :

la génération de spectres virtuels en simulant des structures virtuelles ; et

dans lequel les données de simulation représentent les structures virtuelles et les spectres virtuels.

3. Procédé selon la revendication 2, dans lequel l'obtention (S200) du premier modèle comprend la vérification du premier modèle sur la base d'une erreur entre des données de sortie du premier modèle et les données de simulation.

4. Procédé selon une quelconque revendication précédente, dans lequel :

le second modèle comprend en outre un quatrième sous-modèle suivant le troisième sous-modèle ; et

l'entraînement (S600) du second modèle comprend l'entraînement du quatrième sous-modèle sur la base des données de spectre d'échantillon tout en fixant le troisième sous-modèle de telle sorte que le troisième sous-modèle ne soit pas entraîné.

5. Procédé selon la revendication 4, dans lequel :

chacun du premier sous-modèle et du troisième sous-modèle comprend un réseau à convolution ; et

chacun du deuxième sous-modèle et du quatrième sous-modèle comprend un réseau interconnecté.

6. Procédé selon une quelconque revendication précédente, comprenant en outre :

la vérification du second modèle sur la base d'une erreur entre des données de sortie du second modèle et des données de structure mesurées des structures d'échantillon.

7. Procédé selon une quelconque revendication précédente, dans lequel l'entraînement du second modèle comprend l'entraînement du second modèle de telle sorte qu'une perte proportionnelle à une erreur entre la première relation et la seconde relation diminue.

8. Procédé selon une quelconque revendication précédente, comprenant en outre :

l'ajustement d'au moins un sous-processus sur la base de la structure estimée ; et

la fabrication d'un circuit intégré par l'intermédiaire d'un processus semiconducteur comprenant l'au moins un sous-processus ajusté.

9. Système comprenant :

au moins un processeur ; et

un support de stockage stockant des instructions qui, lorsqu'elles sont exécutées par l'au moins un processeur, donnent l'ordre à l'au moins un processeur de réaliser une mesure d'une structure sur la base d'un spectre de la structure,

dans lequel la mesure de la structure comprend :

l'obtention (S200) d'un premier modèle entraîné sur la base de données de simulation, le premier modèle incluant un premier sous-modèle et un deuxième sous-modèle suivant le premier sous-modèle ;

la génération (S400) d'un second modèle de telle sorte que le second modèle inclue un troisième sous-modèle généré à partir d'au moins une partie du premier sous-modèle ;

l'entraînement (S600) du second modèle sur la base de données de spectre d'échantillon générées en mesurant des spectres de structures d'échantillon ;

l'estimation (S800), sur la base du second modèle entraîné, de la structure à partir de données de spectre mesurées générées en mesurant le spectre de la structure ; et

la vérification du second modèle sur la base de données de sortie du premier modèle et de données de sortie du second modèle,

**caractérisé en ce que**

la vérification du second modèle comprend :

l'extraction d'un premier échantillon et d'un second échantillon des données de simulation ;

l'obtention de premières données de sortie et de deuxièmes données de sortie du premier modèle, les premières données de sortie et les deuxièmes données de sortie correspondant respectivement au premier échantillon et au second échantillon ;

l'obtention de troisièmes données de sortie et de quatrièmes données de sortie du second modèle, les troisièmes données de sortie et les quatrièmes données de sortie correspondant respectivement au premier échantillon et au second échantillon ; et

la vérification du second modèle sur la base d'une première relation entre les premières données de sortie et les deuxièmes données de sortie et d'une seconde relation entre les troisièmes données de sortie et les quatrièmes données de sortie, et

dans lequel l'entraînement du second modèle est répété lorsque la vérification du second modèle échoue.

10. Système selon la revendication 9, dans lequel l'obtention (S200) du premier modèle comprend la génération de spectres virtuels en simulant des structures virtuelles, dans lequel les données de simulation représentent les structures virtuelles et les spectres virtuels.

11. Système selon la revendication 10, dans lequel l'obtention (S200) du premier modèle comprend la vérification du premier modèle sur la base d'une erreur entre des données de sortie du premier modèle et les données de simulation.

12. Système selon l'une quelconque des revendications 9-11, dans lequel :

le second modèle comprend en outre un quatrième sous-modèle suivant le troisième sous-modèle ; et

l'entraînement du second modèle comprend l'entraînement du quatrième sous-modèle sur la base des données de spectre d'échantillon tout en fixant le troisième sous-modèle de telle sorte que le troisième sous-modèle ne soit pas entraîné.

13. Système selon la revendication 12, dans lequel :

chacun du premier sous-modèle et du troisième sous-modèle comprend un réseau à convolution ; et

chacun du deuxième sous-modèle et du quatrième sous-modèle comprend un réseau interconnecté.

14. Système selon l'une quelconque des revendications 9-13, dans lequel la mesure de la structure comprend en outre la vérification du second modèle sur la base d'une erreur entre des données de sortie du second modèle et des données de structure mesurées des structures d'échantillon.

# FIG. 1

10

# FIG. 2

```
                              ( START )
                                  |
      D22                         v
  ┌──────────┐          ┌─────────────────────┐
  │Simulation│───────→  │ OBTAIN FIRST MODEL   │──── S200
  │  Data    │          └─────────────────────┘
  └──────────┘                    |
                                  v
                        ┌─────────────────────┐
                        │GENERATE SECOND MODEL │──── S400
                        └─────────────────────┘
      D24                         |
  ┌──────────┐                    v
  │ Sample   │───────→  ┌─────────────────────┐
  │  Data    │          │ TRAIN SECOND MODEL   │──── S600
  └──────────┘          └─────────────────────┘
      D26                         |
  ┌──────────┐                    v
  │ Measured │───────→  ┌─────────────────────┐
  │  Data    │          │ ESTIMATE STRUCTURE   │──── S800
  └──────────┘          └─────────────────────┘
                                  |
                                  v
                              (  END  )
```

# FIG. 3

FIG. 4

# FIG. 5

# FIG. 6

```
                              S400'
        ┌─────────┐
        │  START  │
        └─────────┘
             │
             ▼
┌─────────────────────────────┐
│  GENERATE THIRD SUB-MODEL    │──── S420
└─────────────────────────────┘
             │
             ▼
┌─────────────────────────────┐
│  GENERATE FOURTH SUB-MODEL   │──── S440
└─────────────────────────────┘
             │
             ▼
        ┌─────────┐
        │   END   │
        └─────────┘
```

# FIG. 7

# FIG. 8

# FIG. 9

START

S660'

VERIFY SECOND MODEL,
BASED ON MEASURED STRUCTURE DATA — S662

VERIFY SECOND MODEL,
BASED ON OUTPUT DATA OF FIRST MODEL — S664

END

# FIG. 10

| Model | First Model | Second Model (fail) | Second Model (pass) |
|---|---|---|---|
| PCA | | | |

# FIG. 11

S664'

START

EXTRACT FIRST SAMPLE AND SECOND
SAMPLE FROM SIMULATION DATA — S664_1

OBTAIN FIRST OUTPUT DATA
AND SECOND OUTPUT DATA
FROM FIRST MODEL — S664_2

OBTAIN THIRD OUTPUT DATA
AND FOURTH OUTPUT DATA
FROM SECOND MODEL — S664_4

IDENTIFY FIRST RELATIONSHIP
BETWEEN FIRST OUTPUT DATA
AND SECOND OUTPUT DATA — S664_3

IDENTIFY SECOND RELATIONSHIP
BETWEEN THIRD OUTPUT DATA
AND FOURTH OUTPUT DATA — S664_5

VERIFY SECOND MODEL
BASED ON FIRST RELATIONSHIP
AND SECOND RELATIONSHIP — S664_6

END

# FIG. 12

```
        ( START )
            │
            ▼
┌─────────────────────────────────┐
│  ADJUST AT LEAST ONE SUB-PROCESS │──── S920
└─────────────────────────────────┘
            │
            ▼
┌─────────────────────────────────┐
│   MANUFACTURE INTEGRATED CIRCUIT │──── S940
│  THROUGH SEMICONDUCTOR PROCESS   │
└─────────────────────────────────┘
            │
            ▼
        ( END )
```

# FIG. 13

```
                                                    ┌─130
┌──────────────────────────────────────────────┐
│                Computer System                 │
│                                                │
│        ┌─131                  ┌─134            │
│   ┌──────────────┐      ┌──────────────┐      │
│   │              │      │   Network    │      │
│   │ Processor(s) │      │   Adapter    │      │
│   └──────────────┘      └──────────────┘      │
│                                                │
│        ┌─132                  ┌─135            │
│   ┌──────────────┐      ┌──────────────┐      │
│   │              │      │     I/O      │      │
│   │    Memory    │      │  Interface   │      │
│   └──────────────┘      └──────────────┘      │
│                                                │
│        ┌─133                  ┌─136            │
│   ┌──────────────┐      ┌──────────────┐      │
│   │   Storage    │      │              │      │
│   │   System     │      │   Display    │      │
│   └──────────────┘      └──────────────┘      │
│                                                │
└──────────────────────────────────────────────┘
```

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021237949 A1
- US 2023213870 A1
- WO 2021140502 A1

**Non-patent literature cited in the description**

- Transfer Learning for Rapid Extraction of Thickness from Optical Spectra of Semiconductor Thin Films. **SIYU ISAAC PARKER TIAN et al.** Arxiv.org. Cornell University Library, 14 June 2022